Europäisches Patentamt

European Patent Office

Office européen des brevets

(11) Publication number: **0 156 569**
**B1**

(12) **EUROPEAN PATENT SPECIFICATION**

(45) Date of publication of patent specification: **23.08.89**

(21) Application number: **85301615.2**

(22) Date of filing: **08.03.85**

(51) Int. Cl.⁴: **G 11 B 17/03**

(54) Loading device for disc cassettes.

(30) Priority: **09.03.84 JP 45879/84**

(43) Date of publication of application:
**02.10.85 Bulletin 85/40**

(45) Publication of the grant of the patent:
**23.08.89 Bulletin 89/34**

(84) Designated Contracting States:
**AT DE FR GB NL**

(56) References cited:
**EP-A-0 013 712**
**EP-A-0 063 894**
**EP-A-0 145 052**
**DE-A-3 229 468**
**US-A-4 434 480**
**US-A-4 439 852**

(73) Proprietor: **SONY CORPORATION**
**7-35 Kitashinagawa 6-Chome Shinagawa-ku**
**Tokyo 141 (JP)**

(72) Inventor: **Yamanouchi, Hiroschi c/o Sony Corporation**
**Patents Division 7-35, Kitashinagawa 6-chome**
**Shinagawa-ku Tokyo (JP)**

(74) Representative: **Purvis, William Michael Cameron et al**
**D. Young & Co. 10 Staple Inn**
**London WC1V 7RD (GB)**

Courier Press, Leamington Spa, England.

## Description

The invention relates generally to a loading device for disc cassettes, wherein a disc cassette is inserted horizontally in a cassette holder, then lowered almost from a cassette inserting position to a cassette loading position and loaded horizontally on a turntable. The invention has particular though not exclusive application to a loading device for micro floppy disc cassettes.

In conventional loading devices for disc cassettes of this kind, known for example from DE-A-32 29 468, a disc cassette is drawn into the cassette holder not automatically by a motor but manually by hand. Therefore, when inserted, the disc cassette is often inclined, and particularly in case of double writable type apparatus, apt to come into heavy contact with an upper head and cause damage thereto. In this conventional loading device, it is necessary to provide room between the cassette holder and the disc cassette, and this room causes the disc cassette to be inclined easily. In addition, the upper head of the double writable type apparatus must be arranged near the top face of the cassette holder.

Further, in the case of conventional loading devices, the cassette holder is lowered from the cassette inserting position to the cassette loading position by the force of a spring. Therefore, when roughly inserted in the cassette holder, the disc cassette is lowered rapidly, so that the upper and lower heads, between which the disc is sandwiched, can collide impulsively with each other and be damaged.

EP-A-0 145 052 which has a priority date of 8 November 1983 but was not published until 19 June 1985 shows in combination a cassette holder, an engagement member to engage an engageable portion of disc cassette, detecting means to detect the position of the cassette upon insertion and draft means powered by a motor to operate raising and lowering means.

EP-A-0 063 894 shows draft means in the form of a continuous driven belt for driving a carriage mounting a picker mechanism for picking and clamping a diskette.

According to the invention there is provided a loading device for a disc cassette having an engageable portion, the loading device comprising a cassette holder mounted horizontally between a pair of right and left support plates disposed on a chassis, the cassette holder being raiseable and lowerable freely between a cassette inserting position and a cassette loading position;

an engagement member which is engaged with said engageable portion of the disc cassette when the disc cassette reaches a first position in the cassette holder during manual insertion of the disc cassette in a predetermined horizontal direction into the cassette holder in the cassette inserting position;

detecting means for detecting further insertion of the disc cassette into the cassette holder to a second position beyond the first position;

a draft means for drawing the engagement member in the inserting direction against the force of a spring so as to draw-in the disc cassette by a motor which is started on a signal produced by the detecting means;

a transmission means to drive the draft means by the motor;

a raising and lowering means to lower the cassette holder to the cassette loading position, when the disc cassette which is drawn into the cassette holder by the draft means reaches a third position beyond the second position; and

a manually operable ejection control means to disengage the transmission means with respect to the motor, so that the cassette holder is free to be raised to the cassette inserting position from the cassette loading position by the raising and lowering means under the urging of the spring to cause the cassette holder to eject the disc cassette in the cassette inserting position.

Thus, the disc cassette, which is usually ejected automatically due to reverse rotation of a motor, can automatically be ejected at the time of an electric failure or emergency by the force of the spring triggered through a hand-operated mechanism.

Preferably the engagement member is mounted slidably within a predetermined extent on a sliding member and urged in the return direction by another spring, and further the sliding member is mounted slidably on the chassis and is urged in the return direction by the spring so that the sliding member may be slid to the second position by the engagement member against the force of the spring, when the disc cassette engaged with the engagement member is pushed in by hand; a drive gear rotated by the motor which is mounted fixedly on the chassis is engaged in the second position with a rack disposed on the sliding member and the motor is started, so that the disc cassette is drawn completely into the cassette holder at the time when the sliding member is slid to the third position; and the raising and lowering means is moved by an operating plate mounted slidably on a side face of one of the support plates, urged in the return direction by a further spring, and moved by the sliding member, so that the cassette holder is lowered to the cassette loading position against the force of the further spring leaving the engagement member in position.

Such a loading device for disc cassettes causes a disc cassette to be automatically drawn into a predetermined position in the cassette holder after being inserted manually to a certain extent in the cassette holder, then lowered automatically from the cassette inserting position to the cassette loading position by the motor, and loaded automatically on a turntable.

The disc cassette is so drawn automatically into the cassette holder as to be inserted always accurately in the cassette holder, and prevented from being inclined when inserted, and coming in heavy contact with the upper head, so that the upper head will not be damaged.

The loading device can cause the cassette holder to be lowered quietly and accurately with a constant speed by the motor from the cassette inserting position to the cassette loading position after a disc cassette is inserted in a predetermined position in the cassette holder, and never be lowered roughly and rapidly to the cassette loading position, so that the upper and lower heads are prevented from colliding impulsively with each other with a disc sandwiched therebetween and receiving damage.

The invention is diagrammatically illustrated by way of example with reference to the accompanying drawings, in which:-

Figure 1 is a plan view of an embodiment of a loading device for micro floppy disc cassettes according to the invention;

Figures 2A and 2B are enlarged views taken on line II - II on Figure 1 in different operating positions;

Figures 3A and 3B are enlarged views taken on line III - III on Figure 1 in different operating positions;

Figure 4 is an exploded, perspective view of part of the loading device; and

Figures 5A to 5D are enlarged plan views of parts of the loading device in different operating positions.

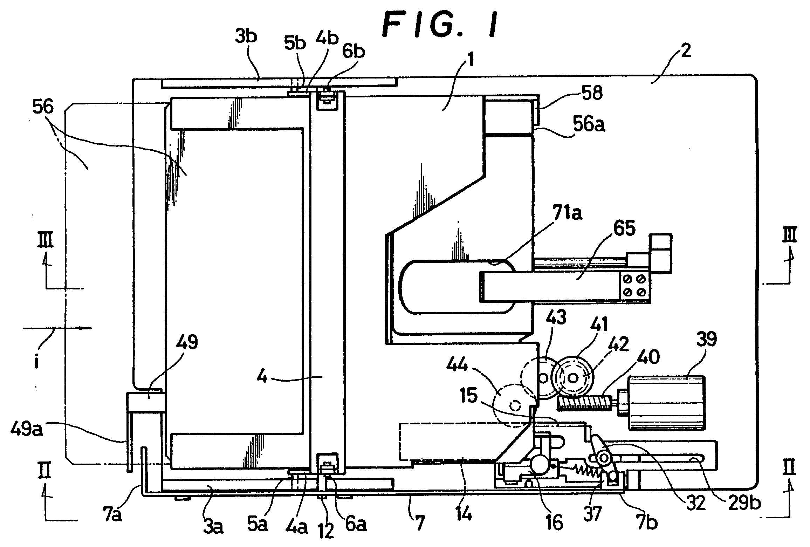

A loading device for micro floppy disc cassettes includes a raising and lowering mechanism for a cassette holder 1 which is described with reference to Figures 1 to 4.

The cassette holder 1 is disposed horizontally between a pair of right and left support plates 3a and 3b which are disposed upright on a chassis 2. A connecting plate 4 provided horizontally over the cassette holder 1 and between the pair of support plates 3a and 3b, is so mounted on the support plates 3a and 3b as to be able to turn in up and down directions on first pivots 5a and 5b which protrude from respective right and left ends 4a and 4b of the connecting plate 4.

The cassette holder 1 is pivotally suspended at its almost central position with regard to its longitudinal axis through second pivots 6a and 6b which are fitted in respective bearings so disposed on the right and left ends 4a and 4b of the connecting plate 4 as to be spaced upward from the first pivots 5a and 5b.

An operating plate 7 for raising and lowering the cassette holder 1 is arranged along the outside of the support plate 3a, and is guided by a combination of a pair of elongate holes 8a and 8b which are so provided in the operating plate 7 as to be spaced in its longitudinal direction from each other, and a pair of guide pins 9a and 9b protruding from the support plate 3a and slidably engaged in the respective elongated holes 8a and 8b.

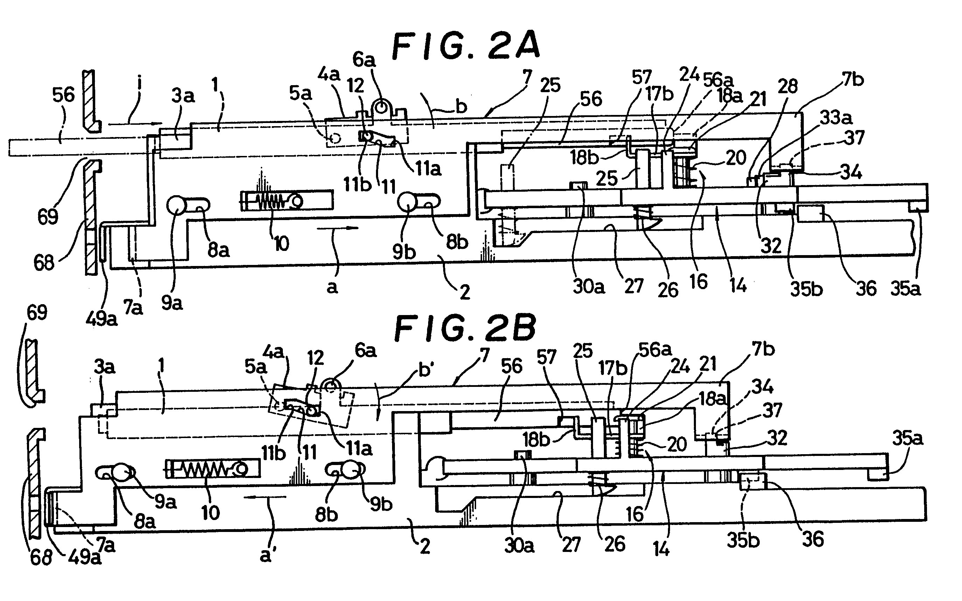

The operating plate 7 is urged slidably in the rear direction (in the direction of arrow a as shown in Figure 2A) by a first spring 10, and an inclined guideway 11 which is inclined downwardly in the rearward direction and is provided in the operating plate 7. A pin 12 disposed on one end 4a of the connecting plate 4 is loosely engaged in the inclined guideway 11.

When the operating plate 7 is slid in the direction of arrow a' as shown in Figure 2B against the force of the first spring 10 by a drive mechanism (described hereinafter) for driving the operating plate 7, the pin 12 is guided by the inclined guideway 11 and moved to a horizontal lower end 11a of the inclined guideway 11. The connecting plate 4 is thereby rotated in the direction of arrow b' and the cassette holder 1 is lowered to its loading position.

On the contrary, when the operating plate 7 is slid in the direction of arrow a as shown in Figure 2A, the pin 12 is guided by the inclined guideway 11 and moved to a horizontal upper end 11b of the inclined guideway 11. Then, the connecting plate 4 is rotated in the direction of arrow b and the cassette is raised to its inserting position.

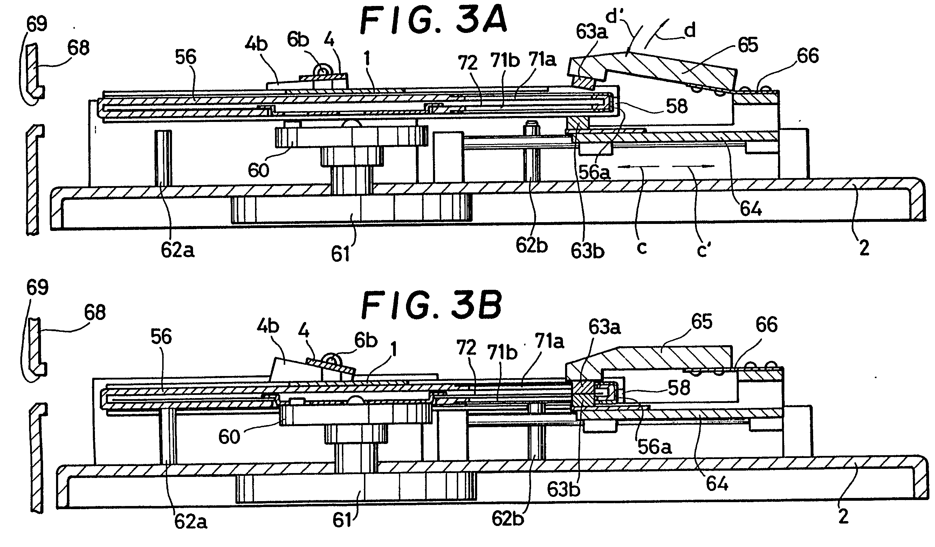

As illustrated in Figures 3A and 3B, a turntable 60 is arranged horizontally at the centre of the cassette loading position, and this turntable 60 is driven by a motor 61 fixed to the chassis 2. Arranged at the sides, the front and the rear of the turntable 60 are four positioning pins 62a and 62b which are also fixed to the chassis 2.

A pair of upper and lower recording and reproducing heads 63a and 63b are provided at the rear of the turntable 60, and the lower head 63b is secured to a movable stand 64 which is so mounted on the chassis 2 as to be movable to and fro (in direction of arrow c or c'). Further, a support member 65 is so mounted on the movable stand 64 through a leaf spring 66 as to be swingable in the up and down directions (in directions of arrow d and d'), and the upper head 63a is secured to the lower face of the free end of the support member 65.

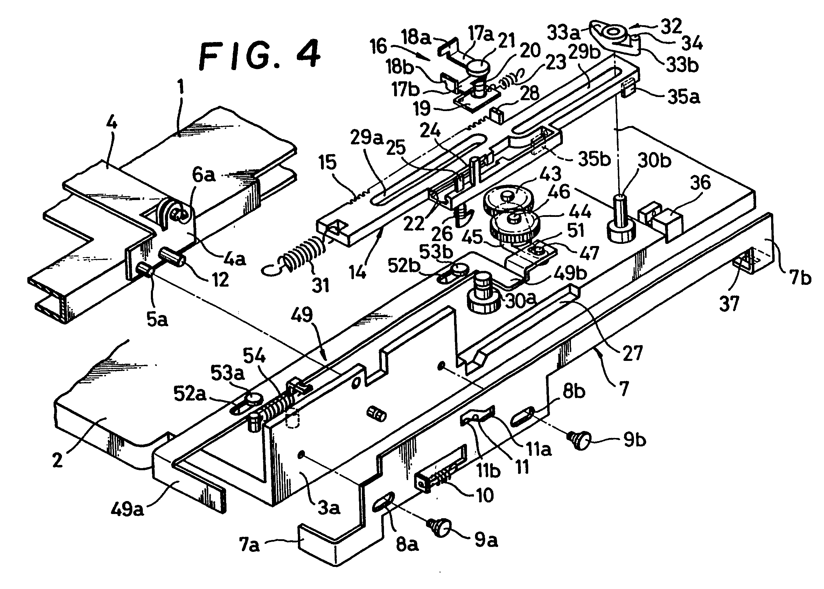

Next, the drive mechanism for driving the operating plate 7 is described hereinafter with reference to Figures 4 to 5D.

A sliding member 14 is mounted on the chassis 2 along the longitudinal axis of the loading device, and this sliding member 14 comprises a front portion, a central portion and a rear portion. A rack 15 is formed on a side of the front portion which is positioned near the centre of the chassis 2 with regard to its longitudinal axis, and an engagement member 16 is mounted on the central portion of the sliding member 14.

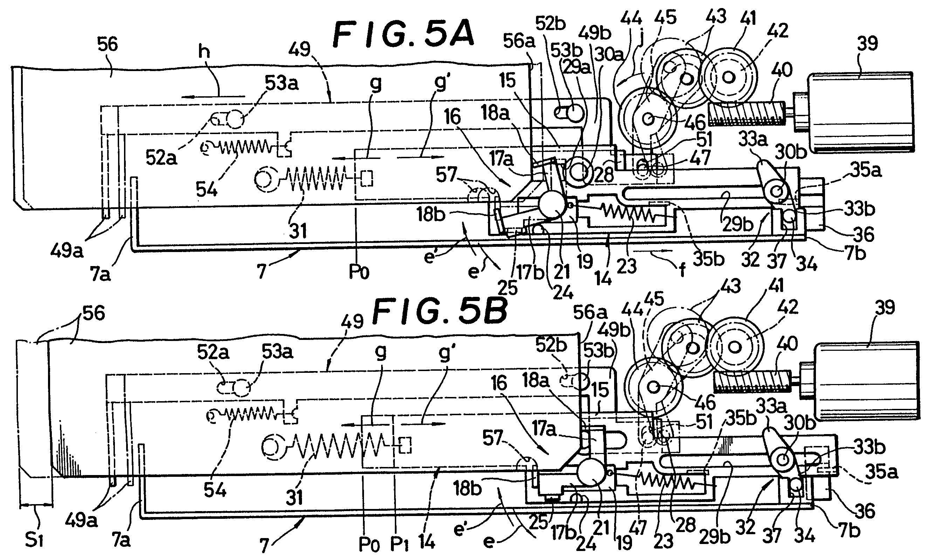

The engagement member 16 comprises an L-shaped member including a pair of arms 17a and 17b, at the respective free ends of which bent ends 18a and 18b project upwardly. A base plate 19 guided by a guideway 22 is disposed on the central portion of the sliding member 14; a flanged head pin 21 connects the L-shaped member to the base plate 19; and a coiled spring 20 surrounds the pin 21 and urges the L-shaped member towards the flanged head of the pin 21, the L-shaped member being swingable in the direction of arrow e as shown in Figure 5A.

The engagement member 16 is urged by a third spring 23 in the direction of arrow f as shown in Figure 5A. A fixed stopper 24 restricts the swing of the engagement member 16 in the direction of arrow e, and a movable stopper 25 restricts the return of the engagement member 16, when the engagement member is swung in the direction of arrow e' against the force of the coiled spring 20 as shown in Figure 5B. That is, the movable stopper 25 is urged downward by a spring 26, and is acted upon by a guideway 27 provided on the chassis 2 so as to be moved in the upward direction.

A pressed portion 28 disposed on the sliding member 14 protrudes from the rear of the front portion of the sliding member 14, and the sliding member 14 is guided by a combination of a pair of elongate holes 29a, 29b which are provided respectively in the front portion and the rear portion of the sliding member 14, and a pair of pins 30a and 30b which are disposed on the chassis 2 and engage loosely in the respective elongate holes 29a, 29b.

Further, the sliding member 14 is urged by a second spring 31 in the forward direction (the direction of arrow g as shown in Figure 5A), and a rotary member 32 is mounted rotatably on one of the pins 30a, 30b. The rotary member 32 has a pair of arms 33a and 33b, and a pin 34 protrudes from one of the arms 33a, 33b.

From the rear lower face of the sliding member 14, protrudes a pair of detector members 35a and 35b. The detector members 35a, 35b are detected by a sensor 36, such as a photo-coupler, when the sliding member 14 is moved slidingly. The sensor 36 is fixed to the chassis 2.

The operating plate 7 is so bent at its forward end as to approach the front of the chassis 2, and further, an engagement groove 37, in which the pin 34 of the rotary member 32 is loosely engaged, is provided at the rear end of the operating plate 7.

At the rear portion of the chassis is mounted a motor 39 which is rotatable in both regular and reverse directions. A worm 40 fixed to the shaft of the motor 39 is engaged with a worm wheel 41, a gear 42 integrally formed with and located under the worm wheel 41 is engaged with an intermediate gear 43, and the intermediate gear 43 is engaged with a drive gear 44.

The intermediate gear 43 and the drive gear 44 are supported on an arm 45 which has a sharply curved part, and is so mounted on the chassis 2 as to turn on a pivot 46. That is, the arm 45 has a pin 47 at one end, the intermediate gear 43 is rotatably arranged at the other end of the arm 45, and the drive gear 44 is so arranged as to rotate on the pivot 46. Thus, these gears, i.e. the gear 42, the intermediate gear 43 and the drive gear 44, constitute a transmission mechanism, and a gear clutch is formed by means of rotating the arm 45 and breaking an engagement between the gear 42 and the intermediate gear 43.

An ejection operating member 49 extends adjacent to the sliding member 14, nearer the centre of the chassis 2 as compared with the sliding member 14. The forward end 49a of the ejection operating member 49 is so bent as to project in front of the forward end 7a of the operating plate 7, and an elongate hole 51 is provided at the rear of the ejection operating member 49 and receives the pin 47 of the arm 45 loosely therein.

The ejection operating member 49 is guided by a combination of a pair of elongate holes 52a and 52b which are provided in the ejection operating member 49, and a pair of guide pins 53a and 53b disposed on the chassis 2, so that the ejection operating member 45 can be moved slidably in the longitudinal direction of the chassis 2. In addition, the ejection operating member 49 is urged by a spring 54 in the forward direction (in the direction of arrow h as shown in Figure 5A).

Now, the function of the loading device for the micro floppy disc cassettes described above will be described.

As indicated in dot-and-dash lines in Figures 1 and 2A, a disc cassette 56 is inserted horizontally into the cassette holder 1 in the direction of arrow i through an insertion slot 69 disposed in a front panel 68 of the loading device.

When the disc cassette 56 is pushed by hand in succession, the leading edge 56a of the disc cassette 56 is pressed against the bent end 18a of the arm 17a of the engagement member 16 as indicated in solid lines in Figure 5A. The engagement member is thereby rotated in the direction of arrow e' against the force of the spring 20 as indicated in dot-and-dash lines.

When the disc cassette 56 is pushed further in, the bent end 18b of the arm 17b of the engagement member 16 is engaged with a portion 57 of the lower face near the side of the disc cassette 56, and then the sliding member 14 which has become locked with the disc cassette 56 is slid in the direction of arrow g' against the force of the second spring 31.

When the detector piece 35a is detected by the sensor 36, the motor 39 is driven in the regular direction, and thereby, the drive gear 44 is rotated in the direction of arrow j through the transmission mechanism.

In the meantime, as soon as the sliding member 14 begins to slide, the movable stopper 25 is guided by the guideway 27 of the chassis 2 and moved upward against the force of the spring 26 from a position indicated in dot-and-dash lines to a position indicated in solid lines in Figure 2A, and thereby the engagement member 16 is restrained from rotating in the direction of arrow e, so that the engagement between the disc cassette 56 and the engagement member 16 is retained.

When the sliding member 14 is slid in succession due to pushing the disc cassette 56 by hand and reaches the position shown in Figure 5B, the rack 15 of the sliding member 14 is engaged with the drive gear 44 and thereby, the disc cassette 56 begins to be moved automatically.

The various above manual operations for the duration of pushing the disc cassette 56 is performed by movement of the disc cassette 56 over a very small distance $S_1$, e.g. $S_1$ 5 mm, in the embodiment mentioned above and the sliding member 14 is thereby slid from an initial position $P_0$ to a first position $P_1$ as shown in Figures 5A and 5B.

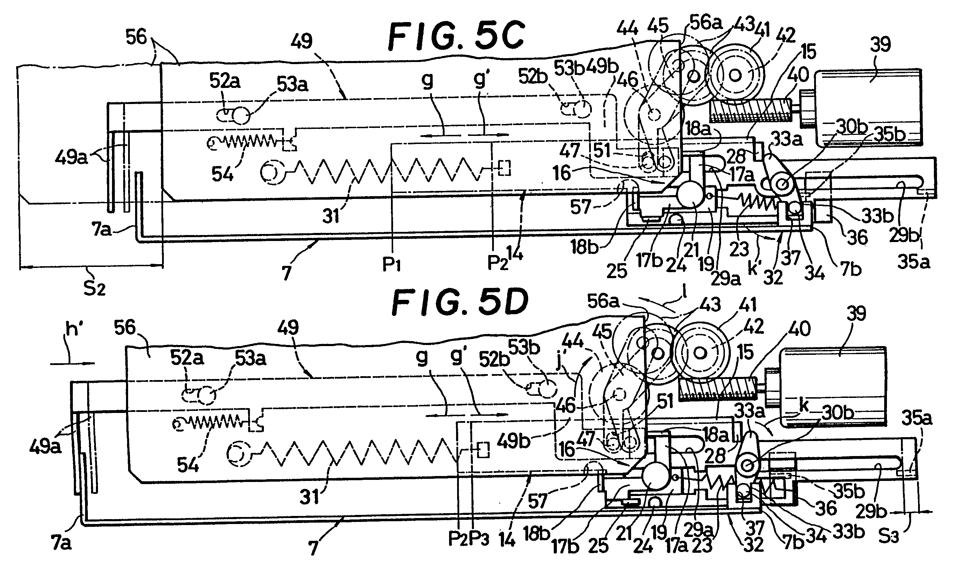

As the sliding member 14 is slid in the direction of arrow g' against the force of the second spring 31, the disc cassette 56 is drawn into the cassette holder 1 and as soon as the disc cassette 56 abuts against a stopper 58 formed integrally with and situated at the rear end of the casette holder 1, the disc cassette 56 cannot move further into the disc cassette holder 1 as shown in Figures 1, 3A and 5C. At this time, the pressed portion 28 of the sliding member 14 is in contact with the arm 33a of the rotary member 32 as shown in Figure 5C.

The above operation is performed while the disc cassette 56 moves over a distance $S_2$, that is, the sliding member 14 moves from the position where the rack 15 begins to engage with the drive gear 40, to a second position $P_2$ where the disc cassette 56 is completely drawn into the cassette holder 1, and in case of the above embodiment, the length $S_2$ is about 17 mm.

While the sliding member 14 is slid further the engagement member 16 is held in the position shown in Figure 5C, because the disc cassette 56 cannot be moved. Therefore the third spring 23 is stretched. At the same time, the arm 33a of the rotary member 32 is pushed by the pressed portion 28 of the sliding member 14 as shown in Figure 5D, and the rotary member 32 is rotated in the direction of arrow k. Then, the operating member 7 is pushed by the pin 34 of the rotary member 32, and slid in the direction of arrow a' against the force of the first spring 10. Thereby, the cassette holder 1 is lowered from the cassette inserting position to the cassette loading position.

At this time, the L-shaped member of the engagement member 16 is moved downward against the force of the spring 20, so that the engagement between the disc cassette 56 and the L-shaped member is retained, and the motor 39 is stopped, because the detector piece 35b is detected by the sensor 36.

The above operation is performed while the disc cassette 56 moves a distance $S_3$, that is, the sliding member 14 moves from the second position $P_2$ to a final position $P_3$ as shown in Figure 5D, and in case of the embodiment described, the length $S_3$ is about 3 mm.

As described above, the cassette holder 1 is lowered from the cassette inserting position to the cassette loading position, so that the disc cassette 56 is also lowered in parallel motion from the position above the turntable 60 as shown in Figure 3A, to the position on the turntable 60 as shown in Figure 3B, so as to be loaded onto the turntable 60 and simultaneously mounted on the positioning pins 62a, 62b.

On the other hand, when the disc cassette 56 is loaded as described above, the lower head 63b is inserted into an opening 71b of the disc cassette 56 as shown in Figure 3B, and comes into contact with the lower face of the magnetic disc 72. The support member 65 is rotated in the direction of arrow d' as the cassette holder 1 is lowered, so that the upper head 63a is inserted into an opening 71a of the disc cassette 56 and comes into contact with the upper face of the magnetic disc 72. Thereby, the loading operation of the disc cassette 56 is completed.

Now, the ejecting operation of the disc cassette 56 will be described.

From the state illustrated in Figure 5D, the motor 39 is rotated reversely by command signal for ejecting the disc cassette 56, the drive gear 44 is rotated in the direction of arrow j' and the sliding member 14 is slid in the direction of arrow g.

At this time, the displacement of the sliding member 14 is absorbed by the contraction of the third spring 23, so that the engagement member 16 is not moved, and therefore, the disc cassette 55 engaged therewith is also kept abutted against the stopper 58 of the cassette holder as shown in Figure 5D.

The rotary member 32 is rotated in the direction of arrow k' due to the above movement of the sliding member 14, so that the operating plate 7 is slid in the direction of arrow a by the force of the first spring 10. As shown in Figure 2A, the connecting plate 4 is rotated in the direction of arrow b on the first pivots 5a and 5b, and the cassette holder 1 is raised to the cassette inserting position.

Due to the successive rotation of the motor 39, the sliding member 14 is slid in the direction of arrow g as shown in Figures 5C and 5B, and the disc cassette is pushed by the engagement member 16 and ejected.

Thus, even after the rack 15 of the sliding member 14 is disengaged from the drive gear 44, the sliding member 14 is slid in succession in the direction of arrow g by the force of the second spring 31. Accordingly, the movable stopper 25 guided by the guideway 27 of the chassis 2 is moved downward, and the L-shaped member of the engagement member 16 is rotated in the direction of arrow e by the force of the coiled spring 20.

Then, the bent end 18b of the arm 17b of the engagement member 16 is disengaged from the engagement portion 57 of the disc cassette 56 and simultaneously, the bent end 18a of the arm 17a pushes forward the disc cassette 56 so as to eject the disc cassette 56 as shown in Figure 5A.

Thus, the disc cassette 56 is both loaded and ejected automatically through the power of the motor 39. The disc cassette 56 is never inclined in the cassette holder 1 when inserted, because it is drawn-in very stably. Hence, it is possible to prevent the disc cassette 56 from colliding with the upper head 63a. Further, as the cassette holder 1 can be lowered quietly with a constant speed, the upper and lower heads 63a and 63b do not come in contact impulsively with the magnetic disc 72 and thus will not be damaged as the disc cassette 56 is lowered.

In the meantime, the third spring 23 which connects the engagement member 16 with the sliding member 14 has a function of positioning the disc cassette in the cassette holder 1 when the cassette holder 1 is raised or lowered. That is, the sliding member 14 stretches the third spring 23, while it is slid from the second position $P_2$ where the disc cassette 56 is completely drawn-up, to the final position $P_3$, so that the disc cassette 56 is pressed surely by the force of the third spring 23 against the stopper 58 of the cassette holder 1, and it becomes possible to set the disc cassette 56 accurately on the turntable 60.

Further, if the disc cassette 56 is pushed just a little by hand after the disc cassette 56 is inserted through the insertion slot 69 of the front panel 68, the disc cassette 56 is loaded automatically by the motor 39. Similarly, the disc cassette 56 is ejected automatically by the motor 39. Accordingly, it is not necessary to have the insertion slot 69 wide enough to make it possible easily to hold the disc cassette 56 between fingers and thumb. The small insertion slot improves the appearance of the front panel of the loading device.

Furthermore, as the disc cassette 56 is ejected automatically by the motor 39, it becomes possible to eject it automatically, for example by computer-controlled signals.

Next, the ejecting operation of the disc cassette 56 at the time of an electricity failure or emergency is described hereinafter.

From the state in which the disc cassette 56 is in the cassette loading position as shown in Figure 5D, if the front end 49a of the ejection operating member 49 is pushed as indicated in dot-and-dash lines and the ejection operating member 49 is slid in the direction of arrow h' against the force of the spring 54, the pin 47 of the arm 45 is pressed by an edge of the elongate hole 51 disposed at the rear end 49b of the ejection operating member 49, and the arm 45 is rotated as indicated in dot-and-dash lines in the direction of arrow l on the pivot 46.

Then, the intermediate gear 43 is disengaged from the gear 42, and the drive gear 44 becomes freely rotatable, so that the sliding member 14 is slid in the direction of arrow g by the force of the second spring 31.

Thus, the operating plate 7 is slid in the direction of arrow a by the force of the first spring 10, and the connecting plate 4 is rotated counterclockwise on the first pivots 5a and 5b as shown in Figure 2A, so that the cassette holder 1 is raised to the cassette inserting position.

In the meanwhile, when the ejection operating member 49 is slid in the direction of arrow h', its forward end 49a presses the forward end 7a of the operating plate 7. Therefore, the operating plate can be surely moved in the direction of arrow a not only by the force of the first spring 10 but also by the force applied to the forward end 49a of the ejection operating member 49. The movable stopper 25 is moved downward under the guidance of the guideway 27, so that the L-shaped member of the engagement member 16 is rotated in the direction of arrow e. The disc cassette 56 is then pushed and ejected by the bent end 18a of the arm 17a, simultaneously with the bent end 18b of the arm 17b being disengaged from the engagement member 57 of the disc cassette 56.

The operating plate 7 could be constituted differently from that of the illustrated embodiment, which is displaced rearward by the first spring 10. That is, the operating plate 7 could be displaced forward and when the sliding member 14 is slid rearward, the operating plate 7 would be slid rearward against the force of the first spring 10 not through the rotary member 32 but directly by the sliding member 14. In this case, the inclined guideway 11 of the operating plate 7 would be formed with a reverse inclination to that of the illustrated embodiment.

The invention can be applied to the loading device not only for the micro floppy disc cassettes but also for various sorts of disc cassettes, in which recording and/or reproducing discs are accommodated.

The engaged portion of the disc cassette is engaged with the engagement member when the disc cassette which is inserted in the cassette holder, reaches the first position, and when the disc cassette is inserted in succession to the second position, the disc cassette is automatically drawn into the cassette holder through the engagement member by the motor. Therefore, it becomes possible to draw the disc cassette very stably into the cassette holder, so that the disc cassette is prevented completely from being so inclined as to collide with the upper head.

Further, as the disc cassette is drawn-in and reaches the third position, the disc cassette is automatically lowered quietly and accurately with a constant speed. Therefore, the disc cassette is prevented from being lowered rapidly, so that it does not occur that the upper and lower heads, between which the magnetic disc is sandwiched, collide impulsively with each other and are damaged.

## Claims

1. A loading device for a disc cassette (56) having an engageable portion (57), the loading device comprising a cassette holder (1) mounted horizontally between a pair of right and left support plates (3a, 3b) disposed on a chassis (2), the cassette holder (1) being raiseable and lowerable freely between a cassette inserting position and a cassette loading position;

an engagement member (16) which is engaged with said engageable portion (57) of the disc cassette (56) when the disc cassette (56) reaches a first position ($P_1$) in the cassette holder (1) during manual insertion of the disc cassette in a predetermined horizontal direction into the cassette holder (1) in the cassette inserting position;

detecting means (35a, 35b, 36) for detecting further insertion of the disc cassette into the cassette holder (1) to a second position ($P_2$) beyond the first position ($P_1$);

a draft means (14, 15) for drawing the engagement member (16) in the inserting direction against the force of a first spring (31) so as to draw-in the disc cassette (56) by a motor (39) which is started on a signal produced by the detecting means (35a, 35b, 36);

a transmission means (40 to 46) to drive the draft means (14, 15) by the motor (39);

a raising and lowering means (7, 11, 12, 4) to lower the cassette holder (1) to the cassette loading position, when the disc cassette (56) which is drawn into the cassette holder (1) by the draft means (14, 15) reaches a third position (P₃) beyond the second position (P₂); and

a manually operable ejection control means (49) to disengage the transmission means (40 to 46) with respect to the motor (39), so that the cassette holder (1) is free to be raised to the cassette inserting position from the cassette loading position by the raising and lowering means (7, 11, 12, 4) under the urging of said first spring (31) to cause the cassette holder (1) to eject the disc cassette (56) in the cassette inserting position.

2. A loading device according to claim 1; in which the engagement member (16) is mounted slidably within a predetermined extent on a sliding member (14) and urged in the return direction by a second spring (23), and further the sliding member (14) is mounted slidably on the chassis (2) and is urged in the return direction by the first spring (31) so that the sliding member (14) may be slid to the second position (P₂) by the engagement member (16) against the force of the spring (31), when the disc cassette (56) engaged with the engagement member (16) is pushed in by hand; in which a drive gear (44) rotated by the motor (39) which is mounted fixedly on the chassis (2) is engaged in the second position (P₂) with a rack (15) disposed on the sliding member (14) and the motor (39) is started, so that the disc cassette (56) is drawn completely into the cassette holder (1) at the time when the sliding member (14) is slid to the third position (P₃); and in which the raising and lowering means (7, 11, 12, 4) is moved by an operating plate (7) mounted slidably on a side face of one (3a) of the support plates, urged in the return direction by a third spring (10), and moved by the sliding member (14), so that the cassette holder (1) is lowered to the cassette loading position against the force of the third spring (10) leaving the engagement member (16) in position.

3. A loading device according to claim 2; in which the drive gear (44) can be disengaged from the motor (39) by a manually operated means (49) and the cassette holder (1) in the cassette loading position is raised to the cassette inserting position by the forces of said first (31) and third (10) springs, so that the disc cassette (56) is ejected from the loading device.

**Patentansprüche**

1. Ladevorrichtung für eine mit einem Eingriffsabschnitt (57) versehene Plattenkassette (56), bestehend aus

einer rechten und einer linken Trägerplatte (3a, 3b), die an einem Chassis angeordnet sind und zwischen denen ein Kassettenhalter (1) horizontal montiert ist, der zwischen einer Kassetteneinführposition und einer Kassettenladeposition frei anhebbar und absenkbar ist,

einem Greifglied (16), das in den genannten Eingriffsabschnitt (57) der plattenkassette (56) eingreift, wenn diese eine erste Position (P₁) in dem Kassettenhalter (1) erreicht, während die Plattenkassette manuell in dem Kassettenhalter (1) in einer vorbestimmten horizontalen Richtung in die genannte Kassetteneinführposition eingeführt wird,

Detektormitteln (35a, 35b, 36), die ein weiteres Einführen der Plattenkassette in dem Kassettenhalter (1) in eine hinter der ersten Position (P₁) liegende zweite Position (P₂) erfaßt,

Zugmitteln (14, 15), die dazu dienen, das Greifglied (16) gegen die Wirkung einer ersten Feder (31) so anzuziehen, daß die Plattenkassette (56) von einem Motor (39) eingezogen wird, der von den Detektormitteln (35a, 35b, 36) eingeschaltet wird,

Transmissionsmitteln (40 bis 46), über die die Zugmittel (14, 15) von dem Motor (39) antreibbar sind,

Anhebe- und Absenkmitteln (7, 11, 12, 4) zum Absenken des Kassettenhalters (1) in die Kassettenladesposition, wenn die Plattenkassette (56) bei dem von den Zugmitteln (14, 15) bewirkten Einziehen in den Kassettenhalter (1) in eine hinter der zweiten Position (P₂) liegende dritte position (P₃) gelangt,

und einer manuell betätigbaren Auswurfsteuereinrichtung (4), durch die die Transmissionsmittel (40 bis 46) von dem Motor (39) derart abkuppelbar sind, daß der Kassettenhalter (1) durch die Anhebe- und Absenkmittel (7, 11, 12, 4) unter der Krafteinwirkung der ersten Feder (31) frei aus der Kassettenladeposition in die Kassetteneinführposition anhebbar ist und der Kassettenhalter (1) in der Kassetteneinführposition zum Auswerfen der Plattenkassette (56) veranlaßt wird.

2. Ladevorrichtung nach Anspruch 1, bei der das Greifglied (16) so montiert ist, daß es innerhalb einer vorbestimmten Wegstrecke auf einem Gleitglied (14) gleitet, wobei es von einer zweiten Feder (23) in Rückkehrrichtung vorgespannt ist, bei der ferner das Gleitglied (14) gleitbar auf dem Chassis (2) montiert und von der ersten Feder (31) in Rückkehrrichtung vorgespannt ist, so daß es von dem Greifglied (16) gegen die Kraft dieser Feder (31) gleitend in die erste Position geführt werden kann, wenn die mit dem Greifglied (16) in Eingriff stehende Plattenkassette (56) von Hand eingeschoben wird, bei der ferner ein von dem an dem Chassis (2) fest montierten Motor (39) angetriebenes Antriebszahnrad (44) in der zweiten Position (P₂) mit einer an dem Gleitglied (14) angeordneten Zahnstange (15) in Eingriff kommt und der Motor (39) gestartet wird, so daß die Plattenkassette (56) vollständig in den Kassettenhalter (1) hineingezogen wird, wenn das Gleitglied (14) in die dritte Position (P₃) geglitten ist, und bei der die die Anhebe- und Absenkmittel (7, 11, 12, 4) von einer an einer Seitenfläche einer (3a) der Trägerplatten gleitbar montierten Betätigungsplatte (7) bewegt werden, die von einer dritten Feder (10) in Rückkehrrichtung vorgespannt ist und von dem Gleitglied (14) derart bewegt wird, daß der Kassettenhalter (1) gegen die Kraft der dritten Feder (10) abgesenkt wird, wobei das Greifglied (16) in seiner Position verbleibt.

3. Ladevorrichtung nach Anspruch 2, bei der das Antriebszahnrad (44) durch manuell betätigte Mittel (49) von dem Motor (39) gelöst werden kann, wobei der Kassettenhalter (1) durch die Wirkung der ersten (31) und dritten (10) Feder in der Kassettenladevorrichtung in die Kassetteneinführposition angehoben wird, so daß die Plattenkassette (56) aus der Ladevorrichtung ausgeworfen wird.

## Revendications

1. Dispositif de chargement d'une cassette de disque (56) ayant une partie (57) de coopération, le dispositif de chargement comprenant un support (1) de cassette monté horizontalement entre deux plaques droite et gauche de support (3a, 3b) disposées sur un châssis (2), le support (1) de cassette pouvant être soulevé et abaissé librement entre une position d'insertion et une position de chargement de cassette,

un organe de coopération (16) qui est au contact de la partie de coopération (57) de la cassette de disque (56) lorsque la cassette (56) atteint une première position (P₁) dans le support (1) au cours de l'insertion manuelle de la cassette en direction horizontale prédéterminée dans le support (1) qui occupe la position d'insertion de cassette,

un dispositif (35a, 35b, 36) de détection d'une insertion supplémentaire de la cassette dans le support (1) vers une seconde position (P₂) qui se trouve au-delà de la première position (P₁),

un dispositif (14, 15) de tirage de l'organe de coopération (16) dans le sens d'insertion malgré la force d'un premier ressort (31) afin que la cassette (56) soit tirée par un moteur (39) qui est mis en fonctionnement à la suite d'un signal produit par le dispositif de détection (35a, 35b, 36),

une transmission (40 à 46) destinée à provoquer l'entraînement du dispositif de tirage (14, 15) par le moteur (39),

un dispositif de soulèvement et d'abaissement (7, 11, 12, 4) destiné à abaisser le support (1) de cassette vers la position de chargement de cassette, lorsque la cassette (56) de disque qui est tirée dans le support (1) par le dispositif de tirage (14, 15) atteint une troisième position (P₃) qui se trouve au-delà de la seconde position (P₂), et

un dispositif manuel (49) de commande d'éjection destiné à séparer la transmission (40 à 46) du moteur (39), si bien que le support (1) de cassette est libre de remonter vers la position d'insertion de cassette depuis la position de chargement de cassette, à l'aide du dispositif de soulèvement et d'abaissement (7, 11, 12, 4), sous l'action de la force de rappel du premier ressort (31), afin que le support de cassette (1) éjecte la cassette (56) dans la position d'insertion de cassette.

2. Dispositif de chargement selon la revendication 1, dans lequel l'organe de coopération (16) est monté afin qu'il coulisse d'une distance prédéterminée sur un organe coulissant (14) et est rappelé dans le sens du retour par un second ressort (23), et en outre le dispositif coulissant (14) est monté de manière qu'il puisse coulisser sur le châssis (2) et est rappelé dans le sens du retour par le premier ressort (31), si bien que l'organe coulissant (14) peut coulisser vers la seconde position (P₂) sous la commande de l'organe de coopération (16) malgré la force du ressort (31), lorsque la cassette (56) qui est au contact de l'organe de coopération (16) est repoussée vers l'intérieur à la main, dans lequel un pignon menant (44) entraîné par le moteur (39) qui est monté à demeure sur le châssis (2) est en prise, dans la seconde position (P₂), avec une crémaillère (15) disposée sur l'organe coulissant (14) et le moteur (39) est mis en fonctionnement, si bien que la cassette (56) est tirée totalement dans le support de cassette (1) au moment où l'organe coulissant (14) a coulissé jusqu'à la troisième position (P₃), et dans lequel le dispositif de soulèvement et d'abaissement (7, 11, 12, 4) est déplacé par une plaque de manoeuvre (7) montée afin qu'elle puisse coulisser sur une face latérale de l'une (3a) des plaques de support, rappelée dans le sens du retour par un troisième ressort (10), et déplacée par l'organe coulissant (14), si bien que le support (1) de cassette est abaissé vers la position de chargement de cassette malgré la force du troisième ressort (10) avec maintien de l'organe de coopération (16) en position.

3. Dispositif de chargement selon la revendication 2, dans lequel le pignon menant (44) peut être séparé du moteur (39) par un dispositif manuel (49) et le support de cassette (1) occupant la position de chargement de cassette est soulevé vers la position d'insertion de cassette par les forces du premier (31) et du troisième (10) ressort, si bien que la cassette de disque (56) est éjectée du dispositif de chargement.

# FIG. I

EP 0 156 569 B1

FIG. 2A

FIG. 2B

FIG. 3A

FIG. 3B

EP 0 156 569 B1

FIG. 4

4

# FIG.5A

# FIG.5B

EP 0 156 569 B1

# FIG. 5C

# FIG. 5D

EP 0 156 569 B1